# FASCICULE DE BREVET EUROPEEN

(11) **EP 3 694 622 B1**
(45) Date de publication et mention de la délivrance du brevet: **18.12.2024**
(21) Numéro de dépôt: 17911403.8
(22) Date de dépôt: 12.10.2017
(51) Int. Cl.: B01D 15/20, B01D 15/22, G01N 30/60, B01D 15/18

(54) **PROCEDE DE CHROMATOGRAPHIE**
CHROMATOGRAFIEVERFAHREN
CHROMATOGRAPHY METHOD

(43) Date de publication de la demande: 19.08.2020
(73) Titulaire: Parmentier, François, 38400 Saint Martin d'Héres (FR)
(72) Inventeur: Parmentier, François, 38400 Saint Martin d'Héres (FR)
(74) Mandataire: MacLachlan & Donaldson
(86) Numéro de dépôt international: PCT/FR2017/000192
(87) Numéro de publication internationale: WO 2019/073124

(56) Documents cités:
- EP-A1- 0 926 492
- WO-A1-2005/032688
- FR-A1- 3 026 313
- FR-A1- 3 049 874
- LOBINSKI R ET AL: "Multicapillary column gas chromatography with element-selective detection", TRAC TRENDS IN ANALYTICAL CHEMISTRY, ELSEVIER, AMSTERDAM, NL, vol. 18, no. 7, 1 July 1999 (1999-07-01), pages 449 - 460, XP004173127, ISSN: 0165-9936, DOI: 10.1016/S0165-9936(99)00119-3
- "CATEGORIE <<ANALYSES CHIMIQUES ET PHYSICO-CHIMIQUES>> LAUREAT : ALLTECH PRODUIT : MCC, COLONNE MULTICAPILLAIRE", MESURES REGULATION AUTOMATISME, CFE. PARIS, FR, no. 689, 1 November 1996 (1996-11-01), pages 38, XP000679695, ISSN: 0755-219X

## Description

### DOMAINE DE INVENTION

L'invention concerne une colonne chromatographique contenant une phase stationnaire poreuse

### CONTEXTE DE L'INVENTION

La chromatographie est généralement réalisée sur un garnissage poreux constitué de lits de particules fines de quelques micromètres ou dizaines de micromètres de diamètre. Ces garnissages ont une perte de charge élevée en fonctionnement, de plusieurs dizaines à plusieurs centaines de bars, et une faible productivité.

Ces caractéristiques les empêchent d'être utilisés dans des buts industriels extensifs en tant que procédé de séparation.

Le brevet PCT US2004/032958 par Belov et al. propose un exemple d'un mode de réalisation tentant de résoudre ce problème grâce à l'utilisation d'une matière de remplissage multi-capillaire, constituée d'un ensemble de tubes capillaire parallèles. Cependant, les conditions de fonctionnement optimales d'un procédé de production ne sont mentionnées nulle part. Les produits offerts dans les exemples ne sont pas caractérisés. Aucune séparation chromatographique n'est décrite.

Le document "Multicapillary column gas chromatography with element-selective détection", R.Lobinski et al., Trends in analytical chemistry, vol.18, n°7, décrit l'utilisation de garnissages multi-capillaires en chromatographie en phase gazeuse.

Le brevet français de Parmentier 14 59175 présente une nouvelle solution aux problèmes posés par ces garnissages, caractérisée en ce que les parois séparant les canaux sont faites poreuses. Cette configuration permet des rendements très élevés. Cependant, pour une application plus rustique et moins exigeante en rendement, il peut être plus économique de créer des garnissages avec des parois solides et mécaniquement très résistantes.

L'invention propose un garnissage composite pour chromatographie, comprenant au moins une conduite capillaire faite en au moins un premier matériau vitreux, chaque conduite traversant le garnissage entre une face amont à travers laquelle la phase mobile entre dans le garnissage et une face aval à travers laquelle la phase mobile quitte le garnissage,
dans lequel :
- chaque conduite comprend, sur au moins une portion de la paroi intérieure de celle-ci, au moins un matériau secondaire constitué d'un gel organique ou d'un minéral qui est poreux en état solvant,
- l'épaisseur du matériau secondaire définit, à l'intérieur de la conduite, au moins un canal tubulaire vide de matériau solide, le canal étant ouvert afin de permettre à la phase mobile d'entrer et s'étendant de façon continue entre les faces amont et aval de la conduite capillaire,

### BRÈVE DESCRIPTION DE L'INVENTION

L'invention propose un processus d'échange de matériaux, dans lequel une phase mobile gazeuse, liquide ou supercritique contenant des espèces séparées est mise en circulation à travers un garnissage comprenant une phase stationnaire, le produit étant caractérisé en ce que :
le garnissage comprend une pluralité de conduits capillaires formés en un au moins un premier matériau, les conduits traversant le garnissage entre une face amont à travers laquelle la phase mobile entre dans le garnissage et une face aval à travers laquelle la phase mobile quitte le revêtement de garnissage, chaque conduite comprenant, sur au moins une partie de la paroi interne de celle-ci, au moins un matériau secondaire poreux qui est constitué d'un gel organique ou d'un minéral poreux,
l'épaisseur du matériau secondaire définit, à l'intérieur du conduit, au moins un canal tubulaire vide de matériau solide, le canal étant ouvert afin de permettre à la phase mobile d'entrer et de s'étendre de façon continue entre les faces amont et aval du conduit capillaire ; le matériau secondaire a une épaisseur entre 0,05 fois et 0,5 fois le diamètre du matériau de canal
caractérisé en ce que le processus est réalisé sur une colonne dont les conduites ont une épaisseur de matériau secondaire poreux d'entre 0,01 fois et 0,15 fois le diamètre du canal, à une vitesse d'élution entre 5 fois et 50 fois la vitesse optimale de la phase mobile définie par le minimum de la courbe de Van Deemter du composé majoritaire se séparant, dans les conditions de processus
- Le volume cumulatif de la conduite capillaires est supérieur à 15 % du volume de garnissage total.

Avantageusement, le procédé selon l'invention est caractérisé en ce que l'échange de matériaux est effectué de manière telle à accomplir une séparation chromatographique

Avantageusement, le procédé selon l'invention est caractérisé en ce que la séparation d'une charge est effectuée en une pluralité de cycles

Avantageusement, le procédé selon l'invention est caractérisé en ce que le procédé est réalisé avec un temps de cycle inférieur à 600 secondes, plus avantageusement inférieur à 180 secondes et encore plus avantageusement inférieur à 30 secondes.

Avantageusement, le procédé selon l'invention est caractérisé en ce que le matériau secondaire poreux a une épaisseur entre 0,05 fois et 0,25 fois le diamètre du canal

Avantageusement, le procédé selon l'invention est caractérisé en ce qu'il est réalisé sur une colonne dont les conduites contiennent une épaisseur de matériaux poreux entre 0,01 fois et 0,15 fois le diamètre du canal, à un taux d'élution d'entre 5 fois et 25 fois la vélocité de phase mobile optimum définie par le minimum de la courbe de Van Deemter du composé majoritaire se séparant, dans les conditions de procédé.

Avantageusement, le procédé selon l'invention est caractérisé en ce que l'épaisseur de matériau secondaire est supportée sur une paroi capillaire non poreuse comprise entre 0,01 fois et 0,15 fois le diamètre du canal, à une vitesse d'élution comprise entre 5 fois et 25 fois la vitesse de phase mobile optimale définie par le minimum de la courbe de Van Deemter du composé à séparer majoritaire dans les conditions du procédé.

Avantageusement le procédé suivant l'invention est caractérisé en ce que l'épaisseur de matériau secondaire est portée sur une paroi du capillaire non poreuse

Avantageusement le procédé suivant l'invention est caractérisé en ce que le diamètre des canaux est inférieur à 150 micromètre, préférentiellement inférieur à 50 micromètre, et encore plus préférentiellement inférieur à 15 micromètre.

Avantageusement le procédé suivant l'invention est caractérisé en ce que le matériau secondaire est un gel de silice.

Avantageusement le procédé suivant l'invention est caractérisé en ce que le matériau poreux est un gel polymérique

Suivant une voie privilégiée de réalisation de l'invention, le matériau secondaire poreux est un copolymère de styrène et de divinylbenzène comportant des radicaux sulfonique, carboxyliques, aminés ou ammonium quaternaire.

Avantageusement le matériau secondaire poreux supporte une phase stationnaire liquide.

Avantageusement, le procédé chromatographique est conduit en lit mobile simulé.

Avantageusement le procédé chromatographique est conduit sur appareil rotatif annulaire continu.

### BREVE DESCRIPTION DES DESSINS

-- la figure 1 est une vue en coupe d'une vue de principe d'un garnissage multicapillaire cylindrique suivant une direction parallèle à son grand axe.
-- la figure 2 est une vue en coupe d'une vue de principe d'un garnissage -multicapillaire cylindrique suivant une direction perpendiculaire à son grand axe.

- la figure 3 décrit schématiquement la structure d'un exemple de conduit du garnissage.
- les figures 4 et 5 explicitent deux variantes de réalisation d'un procédé chromatographique.

La figure 6 montre les courbes de Van Deemter de garnissages multicapillaires
La figure 7 montre la productivité comparée de garnissages multicapillaires et de garnissages particulaires.
La figure 8 montre la productivité comparée de garnissages multicapillaires et de garnissages particulaires dans une large plage de fonctionnement.

### DESCRIPTION DETAILLEE DE L'INVENTION

L'invention propose un procédé d'échange de matière dans lequel on fait circuler une phase mobile gazeuse, liquide ou supercritique contenant des espèces à séparer au travers d'un garnissage comprenant une phase stationnaire, ledit procédé étant caractérisé en ce que :
- le garnissage comporte une pluralité de conduits capillaires réalisés dans au moins un premier matériau, conduits traversant le garnissage entre une face dite amont par laquelle la phase mobile pénètre dans le garnissage et une face dite aval par laquelle la phase mobile sort du garnissage,
-chaque conduit comporte sur au moins une partie de sa paroi intérieure au moins un second matériau constitué d'un gel organique ou minéral poreux
- l'épaisseur dudit second matériau définit à l'intérieur du conduit au moins un canal tubulaire vide de matière solide et ouvert au passage de la phase mobile, ledit canal s'étendant continûment entre les faces amont et aval dudit conduit capillaire,
-le diamètre moyen des canaux est inférieur à 250 micromètres
- ladite épaisseur de matériau secondaire poreux présente une épaisseur comprise entre 0,05 fois et 0,5 fois le diamètre du canal
-ce procédé est conduit avec une vitesse de la phase mobile comprise entre 5.0 fois et 50 fois la vitesse de phase mobile optimale définie par le minimum de la courbe de Van Deemter du composé à séparer majoritaire dans les conditions du procédé.

Avantageusement le volume cumulé des conduits capillaires représente plus de 15% du volume total du garnissage.

Afin d'augmenter le nombre de plateaux théoriques d'un garnissage pour la chromatographie, on recherche à diminuer les résistances au transfert de matière, et donc les longueurs de diffusion. On cherche donc à travailler avec de faibles couches de matière poreuse, et à travailler à faible vitesse d'élution.

Pour augmenter la productivité horaire d'un garnissage chromatographique en application préparative;ou capacité, on cherche au contraire suivant l'état de l'art à augmenter la quantité de phase stationnaire et à travailler à grande vitesse d élution.

Une optimisation conduite sur les garnissages capillaires suivant l'invention ont au contraire montré que, en diminuant l'épaisseur de couche de phase stationnaire poreuse, le gain en résistance de transfert l'emportait largement sur la perte en capacité, en permettant de conserver de hautes efficacités à très haut débit de phase mobile.

Ce résultat inatendu est le fondement de la présente invention.

Il est permis par des garnissages capillaires, car on maîtrise sur de tels matériaux l'épaisseur de phase stationnaire indépendamment du diamètre des canaux, ce qui n'est pas le cas avec des garnissages particulaires. Ces derniers sont limités à une seule fraction de vide, de l'ordre de 35 à 40%.

D'autre part, le garnissage capillaire permettant une haute perméabilité, les pressions nécessaires a l'obtention de fort débits de phase mobile restent dans l'état de la technique à des coûts raisonnables.

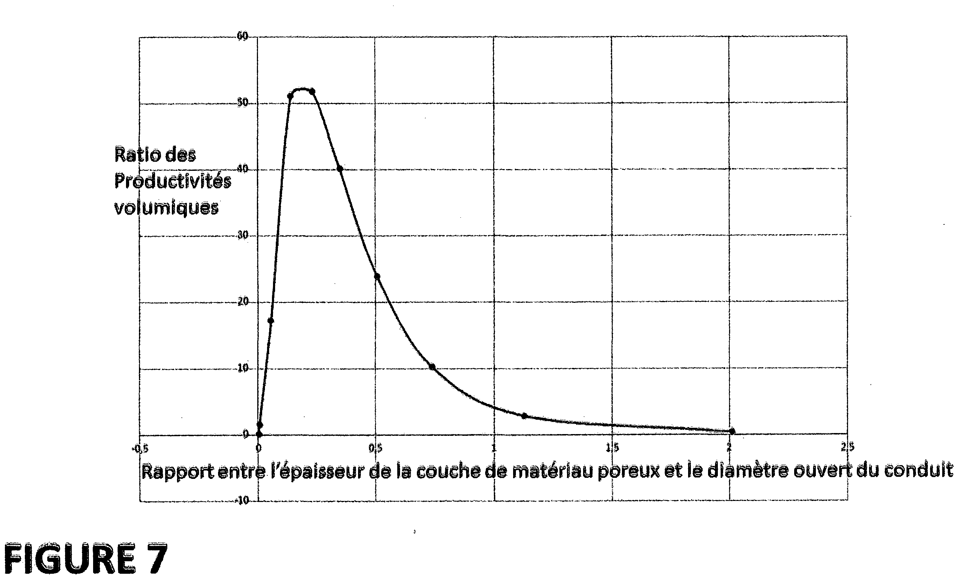

Ces données sont en particulier issues de l'étude menée figure 7.

D'autre part, au delà d'une vitesse égale à 50 fois la vitesse optimale de la courbe de Van Deemter, les pertes de charge du lit deviennent prohibitives.

Avantageusement ce procédé est caractérisé en ce que l'échange de matière est conduit de façon à réaliser une séparation chromatographique

Avantageusement tous les conduits sont rectilignes, traversent le garnissage de part en part et sont débouchant en ses faces amont et aval.

Avantageusement la couche de matériau secondaire poreux est déposée sous forme d'une couche distincte du premier matériau et est portée sur la périphérie intérieure dudit premier matériau.

Dans un tel garnissage, les conduits capillaires comportent une partie substantiellement vides de matière solide, dégageant un canal continu s'étendant de la face amont à la face aval du garnissage, qualifiée dans ce texte de partie des conduits ouverte au passage du fluide ou canal

Le matériau secondaire déposé sur la paroi des conduits est poreux.

En particulier, au moins la paroi des conduits présente un réseau continu de pores, lesdits pores étant ouverts sur les conduits.

Les conduits capillaires sont avantageusement rectilignes, même s'il n'est pas exclu que les conduits présentent des coudes ou des angles.

Suivant l'invention, cette épaisseur de matériau secondaire poreux présente une épaisseur comprise entre 0,05 fois et 0,25 fois le diamètre du capillaire ouvert au passage du fluide ou canal.

Avantageusement, le procédé chromatographique est conduit sur une colonne dont les conduits comportent une épaisseur de matériaux poreux comprise entre 0,01 fois et 0,15 fois le diamètre du conduit ouvert au passage du fluide ou canal, à une vitesse d'élution comprise entre 5 fois et 25 fois la vitesse de phase mobile optimale définie par le minimum de la courbe de Van Deemter

Avantageusement, le diamètre des conduit ouvert au passage du fluide ou canal est inférieur à 250 micromètres, préférentiellement inférieur à 150 micromètres, encore plus préférentiellement inférieur à 50 micromètres et encore plus préférentiellement inférieur à 15 micromètres.

Lorsque le matériau secondaire poreux présente des zones d'épaisseurs différentes, on calculera l'épaisseur de ce matériau comme sa moyenne surfacique sur la partie de la surface de conduit qu'il recouvre.

Avantageusement, le garnissage multicapillaire suivant l'invention sera réalisé avec un diamètre supérieur à 10 mm, de préférence supérieur à 25 mm et encore plus préférentiellement supérieur à 50 mm.

Avantageusement, le garnissage multicapillaire suivant l'invention sera réalisé avec une section supérieure à 1 cm², de préférence supérieur à 5 cm² et encore plus préférentiellement supérieure à 20 cm² de façon à pouvoir servir à un usage préparatif.

Avantageusement, la longueur des conduits est supérieure à 10 millimètres, de préférence supérieure à 50 millimètres, et encore plus préférentiellement supérieure à 200 millimètres.

En effet, sa fabrication est simple et peut être étendue à tout diamètre souhaitable, plusieurs décimètres ou plusieurs mètres.

Ce point important constitue l'un des aspects de l'invention.

En effet, les garnissages pour échange de matière ne pouvaient pas a ce jour être produits avec des diamètres de canaux inférieurs à 250 microns dans de grande dimensions.

Par diamètre du conduit capillaire ouvert au passage du fluide ou canal, on entend le diamètre ou diamètre hydraulique du conduit vide de matière dans lequel le fluide constitué par la phase mobile peut s'écouler librement de façon convective.

Du fait de la faible épaisseur de la couche de matériau secondaire poreux, les phénomènes diffusifs peuvent s'y produire avec une grande rapidité. Il en résulte que le garnissage devient très efficace, et accepte des débits de phase mobile beaucoup plus élevés. Ces deux facteurs conjoints augmentent considérablement sa productivité par unité de volume.

D'autre part, un garnissage multicapillaire présente une perte de charge en opération 10 fois inférieure à celle d'un garnissage particulaire. Cela permet de réduire considérablement le volume du garnissage pour une séparation donnée.

Enfin, le temps de cycle extrêmement court d'un tel garnissage amène de préférence à fractionner une charge en une pluralité de charges traitées en séquence Le cumul de ces facteurs constitue la présente invention.

Ces caractéristiques permettent aux garnissages de la présente invention d'être utilisés en chromatographie préparative, lorsque l'on cherche à séparer des quantités de matière débarrassées d'impuretés.

Ces quantités de matière seront avantageusement supérieures à 10 milligramme par heure, de préférence supérieures à 1 gramme par heure, et encore plus préférentiellement supérieures à 100 grammes par heure.

Avantageusement ces quantités sont séparées en un grand nombre d'injections très rapides pour un procédé discontinu.

En effet on peut constater sur le tableau ci-dessous (voir figure 7) que les temps de cycle d'un procédé chromatographique suivant l'invention sont extrêmement courts, comparés à ceux d'un garnissage particulaire (voir la ligne Temps d'élution Lit capillaire/lit particulaire). Ceci constitue l'un des aspects de l'invention.

Avantageusement, on séparera la charge à purifier par une pluralité de cycles.

Suivant une première voie de réalisation un cycle durera moins de 3600 secondes. Ce sera en particulier le cas des dispositifs échangeurs d'ions.

Avantageusement pour un procédé de chromatographie, chacun de ces cycles durera moins de 600 secondes, préférentiellement moins de 150 secondes, et plus avantageusement moins de 30 secondes.

Avantageusement, chacun de ces cycles durera plus de 3 secondes, avantageusement plus de 10 secondes. Ceci permet de prolonger la durée de vie des organes de contrôle.

Dans le cas d'un procédé cyclique, le temps de cycle est le temps séparant deux injections de charge.

Dans le cas d'un procédé réalisé sur un chromatographe annulaire continu, le temps de cycle représentera le temps pris par une révolution du garnissage.

Dans le cas d'un lit mobile simulé, le temps de cycle sera pris comme le temps de séjour de la phase mobile dans la somme des garnissages élémentaires constituant le procédé.

Ces garnissages présenteront un volume avantageusement supérieur à 1 cm³, de préférence supérieur à 100 cm³, et encore plus préférentiellement supérieur à 1 litre.

Dans le cas de la présente invention, la courbe de Van Deemter sera mesurée dans des conditions de grande dilution, afin de se trouver autant que possible dans le domaine de la chromatographie linéaire.

Avantageusement, la dilution de l'espèce sur laquelle sera mesurée la courbe de Van Deemter aura une concentration dans l'échantillon à séparer inférieure à 5% en mole, plus avantageusement inférieure à 5 pour mille en mole, et encore plus avantageusement inférieure à 500 parties par million en mole.

Avantageusement on prendra pour déterminer la courbe de Van Deemter l'espèce majoritaire en fraction molaire parmi les espèces à séparer.

Par conditions du procédé on entend que la courbe de Van Deemter est mesurée avec la même phase stationnaire, à la même température et avec les mêmes solvants d'élution que le procédé, éventuellement avec les mêmes gradients d'élution de la phase mobile, et les mêmes gradients de température pour la colonne, sur une colonne présentant la même longueur que celle du procédé.

Avantageusement, la courbe de VanDeemter pourra être mesurée sur une colonne standard de 4.6 mm de diamètre.

On sait en effet que les performances en termes de nombre de plateaux théoriques du procédé chromatographique varient peu avec le diamètre de la colonne dans l'état actuel de l'art.

On pourra donc extrapoler a une colonne de plus grand diamètre les performances obtenues sur une colonne de diamètre analytique, plus facile à réaliser et à opérer.

Avantageusement, le matériau secondaire poreux présente un volume poreux compris entre 0,15 et 0,95 cm³/cm³ de matériau.

Plus avantageusement, le matériau secondaire poreux présente un volume poreux compris entre 0,3 et 0,80 cm³/cm³ de matériau.

Avantageusement, le procédé chromatographique est conduit sur une colonne comprenant une épaisseur de matériau secondaire poreux comprise entre 0,01 fois et 0,25 fois le diamètre du capillaire ouvert au passage du fluide ou canal, à une vitesse d'élution comprise entre 2 fois et 25 fois la vitesse de phase mobile optimale définie par le minimum de la courbe de Van Deemter.

Préférentiellement, le procédé chromatographique est conduit sur une colonne comprenant une épaisseur de matériau secondaire poreux comprise entre 0,01 fois et 0,15 fois le diamètre du capillaire ouvert au passage du fluide ou canal, à une vitesse d'élution comprise entre 5 fois et 25 fois la vitesse de phase mobile optimale définie par le minimum de la courbe de Van Deemter.

Plus préférentiellement, le procédé chromatographique est conduit sur une colonne comprenant une épaisseur de matériau secondaire poreux comprise entre 0,01 fois et 0,10 fois le diamètre du capillaire ouvert au passage du fluide ou canal, à une vitesse d'élution comprise entre 5 fois et 50 fois la vitesse de phase mobile optimale définie par le minimum de la courbe de Van Deemter.

Avantageusement, l'épaisseur de matériau secondaire poreux est portée sur une paroi du capillaire dans le premier matériau non poreuse.

Suivant une autre voie de-réalisation, l'épaisseur de matériau secondaire poreux est portée sur une paroi du capillaire dans le premier matériau poreuse.

Avantageusement, le diamètre des conduits ouvert au passage du fluide ou canaux est inférieur à 500 micromètres, préférentiellement inférieur à 250 micromètres, encore plus préférentiellement inférieur à 50 micromètres.

Suivant une voie de réalisation privilégiée, le diamètre des conduits ouvert au passage du fluide ou canaux est inférieur à 15 micromètres.

Suivant une voie privilégiée de réalisation de l'invention, le matériau secondaire poreux est un gel de silice pour la chromatographie.

Avantageusement, la surface spécifique du matériau secondaire poreux est comprise entre 50 et 800 m²/g, et préférentiellement comprise entre 70 et 600 m²/g.

Avantageusement, on mesurera la surface spécifique par adsorption d'azote sur le matériau poreux.

La vitesse de phase mobile est définie comme la vitesse en fut vide ou vitesse superficielle, c'est-à-dire la vitesse qu'aurait le fluide s'il s'écoulait régulièrement sur la totalité de la section du garnissage.

Les conduits capillaires sont avantageusement rectilignes, même s'il n'est pas exclu que les conduits présentent des coudes ou des angles.

Les conduits capillaires présentent une section uniforme les uns par rapport aux autres et sur leur longueur.

On définira commodément la variabilité de section des conduits par un écart type relatif. Cet écart type relatif représente le rapport de l'écart type du diamètre des conduits sur le diamètre moyen des conduits, exprimé en pourcentage. Avantageusement les conduits présents dans le premier matériau présentent un diamètre moyen substantiellement constant d'un conduit à l'autre, tel que l'écart type du diamètre sur l'échantillon de conduits du garnissage ne dépasse pas 10% du diamètre moyen, de préférence ne dépasse pas 2% du diamètre moyen, et encore plus préférentiellement ne dépasse pas 1,0 % du diamètre moyen. Dans le présent texte, on entend par moyenne d'un ensemble de valeurs d'une variable X sa moyenne arithmétique E[X]. L'écart type est défini comme la racine carrée de la moyenne arithmétique de (*X*-E[*X*])². Par distribution, on entend dans le présent texte un ensemble de valeurs de la variable X.

Avantageusement le diamètre du conduit ne varie pas de plus de 10% sur la longueur d'un même conduit.

Avantageusement, ce diamètre ne varie de préférence pas de plus de 2% sur la longueur d'un même conduit. Encore plus avantageusement le diamètre ne varie pas de plus de 1% sur la longueur d'un même conduit.

Avantageusement le diamètre des conduits ouverts au passage du fluide ou canaux présentent un diamètre moyen substantiellement constant d'un conduit à l'autre, tel que l'écart type du diamètre sur l'échantillon de conduits du garnissage ne dépasse pas 10% du diamètre moyen, de préférence ne dépasse pas 2% du diamètre moyen, et encore plus préférentiellement ne dépasse pas 1,0 % du diamètre moyen.

Avantageusement, les conduits traversent le garnissage de part en part, permettant ainsi de minimiser la perte de charge au sein du garnissage lors du procédé de séparation chromatographique.

Avantageusement, le volume cumulé des conduits ouverts au passage du fluide ou canaux représente plus de 5% du volume total du garnissage, de préférence plus de 15% dudit volume total et de manière encore préférée plus de 50% du volume total du garnissage. On entend dans le présent texte par « volume total du garnissage » le volume occupé par le garnissage, incluant sa porosité et ses conduits ; ledit volume total peut donc être calculé à partir des dimensions extérieures dudit garnissage. Le volume des canaux est mesuré de la manière suivante : nombre de canaux x section moyenne d'un conduit ouvert au passage du fluide ou canal x longueur moyenne d'un canal.

Le volume de matériau secondaire est calculé par la formule : nombre de conduits x section moyenne de la phase stationnaire dans un conduit x longueur moyenne d'un conduit.

Avantageusement, le volume des conduits capillaires représente plus de 5% du volume total du garnissage, de préférence plus de 15% dudit volume total et de manière encore préférée plus de 50% du volume total du garnissage. Le volume des conduits est mesuré de la manière suivante : nombre de canaux x section moyenne d'un conduit x longueur moyenne d'un conduit. Par conduit on entend le conduit comprenant le canal et le matériau secondaire poreux.

De manière avantageuse, le volume occupé par le matériau secondaire poreux dans le garnissage est supérieur à 2% du volume du garnissage à l'exclusion des conduits, de préférence supérieur à 5% dudit volume et de manière encore préférée supérieur à 10% dudit volume. Par « volume du garnissage à l'exclusion des conduits », on entend la différence entre le volume total du garnissage et le volume de la partie des conduits capillaires ouverte au passage du fluide ou canaux.

Les conduits peuvent présenter une section de toute forme appropriée, par exemple une forme circulaire, carrée, rectangulaire, hexagonale, en étoile, en forme de fente, etc. Lorsque les conduits ont une section non circulaire, on entend par « diamètre » desdits conduits leur diamètre hydraulique.

En particulier les conduits ont une section de forme circulaire.

En particulier les conduits ont une section de forme hexagonale régulière.

En particulier les conduits ont une forme plane ou en fente délimitée par deux plans parallèles.

De manière avantageuse, les conduits présentent un diamètre hydraulique inférieur ou égal à 250 µm. Selon un mode de réalisation, le diamètre hydraulique des conduits est inférieur ou égal à 50 µm, voire inférieur ou égal à 15 µm. Le diamètre hydraulique est classiquement calculé comme égal à quatre fois la section d'un conduit (en m²) divisée par le périmètre dudit conduit mouillé par la phase mobile (en m).

Enfin, l'écart type relatif de l'épaisseur de matériau secondaire poreux sur une section du garnissage est de préférence inférieur à 10%, encore plus préférentiellement inférieur à 5%, et encore plus préférentiellement inférieur à 2,0%. Dans ce cas, l'écart type relatif caractérise le rapport entre l'écart type de l'épaisseur de matériau poreux et sa moyenne, exprimé en %.

La porosité du matériau peut être avantageusement définie en chromatographie de trois façons:
1. La porosité d'un gel organique pourra provenir du gonflement d'un gel réticulé dans un solvant organique, minéral ou aqueux, gonflement représentant avantageusement plus de 2% de son volume, et préférentiellement plus de 10% de son volume.
2. Elle pourra venir d'une porosité du matériau à l'état non solvaté.
3. Elle pourra venir de la porosité d'un support sur lequel un gel est déposé sous forme d'une couche mince

Selon l'invention, le volume poreux comprend le volume cumulé des micropores, des mésopores et des macropores.

Par porosité du matériau on entend la porosité du matériau secondaire a l'exclusion du volume des conduits ouvert au passage du fluide ou canaux.

Avantageusement, la porosité du matériau secondaire sera mesurée à l'état sec désolvanté.

Par « mésopores » on entend des pores dont le diamètre est compris entre 2 et 50 nanomètres ; par « macropores » on entend des pores dont le diamètre est supérieur à 50 nanomètres ; par « micropores » on entend des pores dont le diamètre est inférieur à 2 nanomètres.

Les tailles de pores mentionnées dans le présent texte sont mesurées selon deux techniques différentes selon la nature du matériau testé : lorsqu'il s'agit d'un matériau minéral et en particulier de silice, la technique employée est la porosimétrie au mercure pour la macro et mésoporosité, et l'adsorption d'azote pour la microporosité ; lorsqu'il s'agit de matériaux polymériques ou basés sur des matrices minérales recouvertes de gels organiques, on utilise la porosimétrie au mercure pour la macroporosité et la porosimétrie par adsorption d'azote pour la mésoporosité et la microporosité.

L'invention est décrite plus en détail dans les dessins décrits ci-dessous.

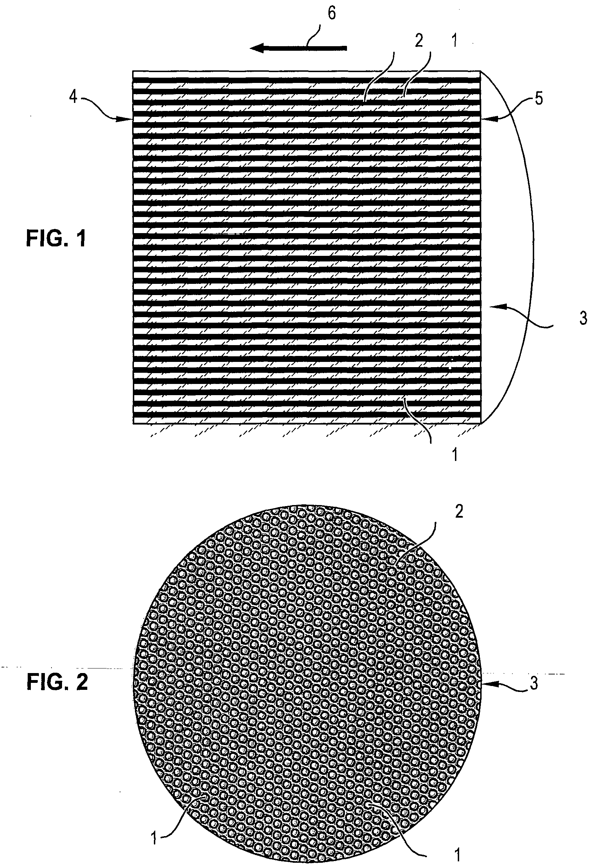

Dans l'exemple illustré sur la figure 1, les conduits capillaires sont droits, parallèles, et espacés de façon régulière. Les différents conduits ont des morphologies et diamètres aussi identiques que possible. Chaque conduit traverse le garnissage de part en part, c'est-à-dire qu'il a avantageusement ses extrémités ouvertes de chaque côté 4 et 5 du garnissage, permettant la circulation du fluide du côté d'entrée 4 vers le côté de sortie 5.

Un tel garnissage peut donc être utilisé dans une colonne chromatographique.

La figure 2 est une vue de dessus de la face 5 du garnissage de la figure 1 vu suivant la direction 6. On distingue les ouvertures des conduits capillaires individuels 1 dans la masse 2 de gel organique.

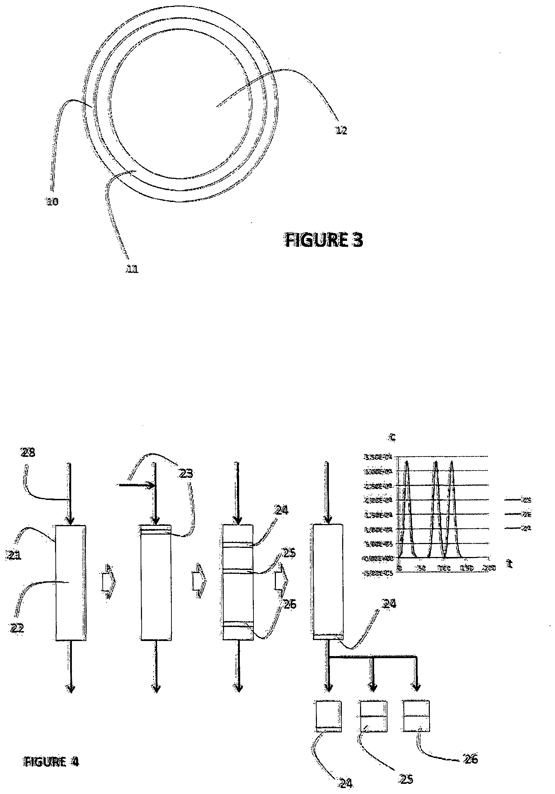

Selon un mode de réalisation la paroi des conduits 10 est constituée d'un continuum solide en un premier matériau supportant le matériau secondaire poreux 11 (figure 3) sur sa périphérie interne. La partie des conduits ouverte au passage d'un fluide est constituée par le passage central du capillaire 12 ou canal. Le conduit peut être de section circulaire ou hexagonale.

Selon ce mode de réalisation, la paroi des conduits est peut être constituée d'un premier matériau non poreux, ledit matériau étant choisi parmi :
-le verre
-la silice
-un silicoaluminate comme la cordiérite
-l'acier inoxydable
-un polymère organique comme par exemple le polypropylène, le polyéthylène, le PEEK, le Polytétrafluoroéthyléne ou PTFE, le fluorure de polyvinylidene ou PVDF.

Suivant un autre mode de réalisation, la paroi des conduits est constituée d'un des matériaux de cette liste auxquels on confère une porosité.

Avantageusement le gel constituant la phase stationnaire est le matériau secondaire poreux et est un gel minéral

Selon un mode réalisation le gel constitué d'une espèce minérale est choisi parmi :
-le gel de silice
-l'alumine activée
-l'oxyde de titane
-l'oxyde de zirconium

Avantageusement le gel constituant la phase stationnaire est le matériau secondaire poreux et est un gel minéral constitué de gel de silice

Avantageusement le gel constituant la phase stationnaire est le matériau secondaire poreux et est un gel organique. On consultera la demande française N° 14 59175 de F. Parmentier pour trouver une description des gel organiques utilisables pour la présente invention.

Un procédé extrêmement simple pour réaliser un garnissage suivant l'invention consiste à partir d'un tube capillaire macroscopique en un matériau étirable, comme un verre, un polymère ou un métal. Ce tube est étiré jusqu'au diamètre souhaité, éventuellement a chaud pour fluidifier le matériau. Des diamètres de 0.2 µm peuvent ainsi être atteints.

Il est recouvert intérieurement d'une pellicule de phase stationnaire homogène en poussant un bouchon d'un précurseur liquide celle-ci dans toute la longueur du tube. Une pellicule se dépose, dans laquelle la porosité est développée par polymérisation avec un agent réticulant en présence d'un solvant et séchage, par dissolution, ou par séchage.

Des tubes issus du procédé précédent sont coupés en tronçons de mêmes dimensions et sont assemblés en parallèle et éventuellement collés jointivement de façon étanche. Ils peuvent être insérés dans une structure résistante à la pression et munis d'organes d'entrée et de sortie des fluides comme des frittés distributeurs et des connections de type standard.

La chromatographie est un procédé de séparation moléculaire particulier caractérisé en ce qu'il effectue une séparation d'un mélange de substances chimiques sous l'action contradictoire
• d'un entrainement dynamique de ces espèces par un courant d'une phase éluante
• d'une rétention de ces espèces par une phase stationnaire.

De préférence ce procédé est poursuivi jusqu'à élution complète des espèces séparées hors de la phase stationnaire.

On distingue deux catégories générales de procédé chromatographique, la chromatographie d'élution et la chromatographie d'affinité.

La figure 4 décrit un procédé de chromatographie d'élution. Suivant ce procédé un flux continu de phase mobile 28 de composition et de température éventuellement variables au cours du temps traverse la colonne de chromatographie 21 remplie d'une phase stationnaire 22. Un volume de charge à séparer 23 est injecté dans le flux d'alimentation. Sous l'effet antagoniste de la rétention réversible des espèces chimiques par la phase stationnaire et de l'élution ou entrainement par la phase mobile, les espèces migrent à des vitesses différentes le long de la colonne 21 et se séparent en bandes ou pics d'élutions 24, 25, 26, etc...

Les espèces séparées sont isolées en fractionnant le flux sortant de la colonne de façon à recueillir chaque bande au moment de sa sortie de la colonne dans le solvant d'élution.

Ce fractionnement peut être temporel dans le cas d'un procédé discontinu ou angulaire dans le cas d'un dispositif annulaire continu. Il peut consister en la séparation d'une fraction de tête et d'une fraction de queue pour un dispositif en lit mobile simulé.

Le chromatogramme représente les pics de concentration des espèces 24, 25, 26 en sortie de colonne en fonction du temps.

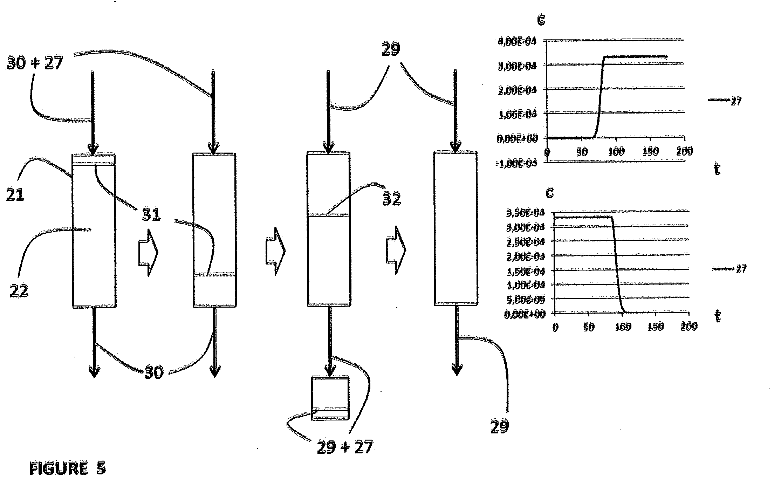

La figure 5 décrit un procédé de chromatographie d'affinité permettant la séparation de molécules, d'ions ou de biomolécules. Un flux continu de solvant 30 contenant la molécule à séparer 27 alimente la colonne de chromatographie 21 remplie d'une phase stationnaire 22 présentant une forte affinité pour la molécule à séparer. Sous l'effet de cette forte affinité la molécule se fixe sur la phase stationnaire continûment jusqu'à saturation de celle-ci. Cette fixation est quasi irréversible dans les conditions de cette première phase. Le front de progression 31 de la concentration en 27 est dans ce cas un créneau progressant vers la sortie. La colonne est saturée lorsque la concentration en 27 devient significative dans le solvant en sortie de la colonne.

Lors d'une deuxième phase, on change les propriétés (pH, force ionique, etc...) ou la nature du solvant d'élution 29 de façon à diminuer ou éliminer l'affinité de la molécule 27 pour la phase stationnaire 22, et à solubiliser la molécule dans le solvant 29. La molécule 27 est éluée dans le solvant 29 sortant de la colonne 21 jusqu'à épuisement de la quantité présente dans celle-ci. La colonne 21 est alors régénérée et est prête pour un nouveau cycle.

Les chromatogrammes représentent les profils de concentration de l'espèce 27 en sortie de colonne en fonction du temps, lors des phases de fixation puis d'élution.

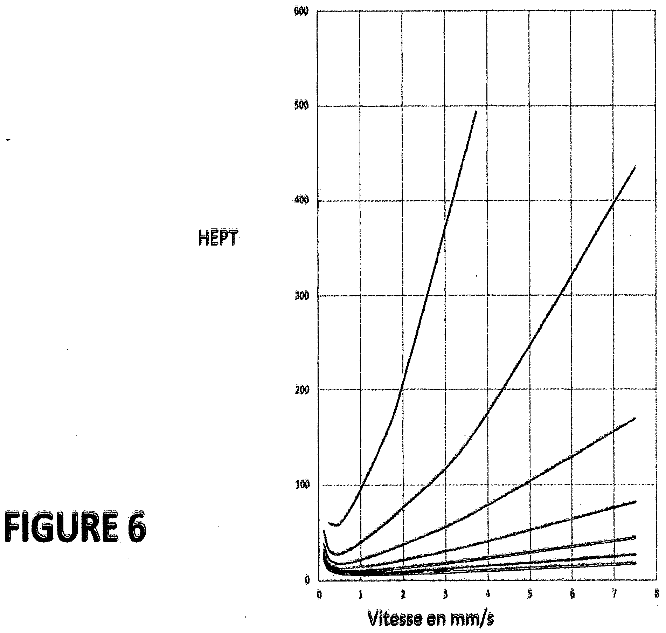

La figure 6 représente les courbes de Van Deemter d'un garnissage multicapillaire présentant des épaisseurs variables d'une phase stationnaire poreuse sur la périphérie interne de ses conduits suivant la disposition décrite figure 3. Une courbe de Van Deemter relie le comportement en efficacité traduit par une hauteur de plateau théorique du garnissage chromatographique, à la vitesse de la phase mobile pour une chromatographie d'élution. On constate que ces courbes de Van Deemter présentent un minimum ou l'efficacité est la meilleure. En abscisse sont portées les vitesses de phase mobile en mm/s mesurées sur la section du conduit incluant l'épaisseur de matériau poreux. En ordonnées sont reportées les hauteurs de plateaux théoriques en micron. On constate que à haute vitesse les courbes de Van Deemter deviennent d'autant plus parallèles a l'abscisse que l'épaisseur de phase stationnaire déposée sur la paroi est faible. Ce fait constitue un trait distinctif de l'invention, et conduit à pouvoir à travailler à plus haut débit et donc avec des productivités du lit plus grande en conservant une plus haute efficacité qu'avec les lits particulaires. Ces courbes sont données pour un diamètre de conduit de section circulaire ouvert au passage du fluide ou canal de 10 micromètres. Les sept courbes de la figure 6 correspondent en allant de haut en bas à des épaisseurs de matériau poreux recouvrant toute la paroi du conduit et égales à, de gauche à droite, en micromètres :

| | | | | | | | | | | |
|---|---|---|---|---|---|---|---|---|---|---|
| 10,1 | | 5,6 | | 3,7 | | 2,5 | | 1,7 | 1,1 | 0,7 |

**Tablleau 1**

| | | | | | | | | | | |
|---|---|---|---|---|---|---|---|---|---|---|
| Rapport Epaisseur de matériau poreux/diamètre du conduit ouvert | 1,0057 | 0,5647 | 0,3693 | 0,2529 | 0,1734 | 0,1147 | 0,0691 | 0,0270 | 0,0025 | 0,0003 |
| Fraction de vide ouverte à la convection | 0,8897 | 0,7795 | 0,6692 | 0,5589 | 0,4487 | 0,3384 | 0,2281 | 0,1000 | 0,0100 | 0,0010 |
| Hauteur Réduite | 6,6664 | 3,0252 | 1,8004 | 1,2461 | 0,9617 | 0,8057 | 0,7191 | 0,5632 | 0,5036 | 0,4983 |
| Vitesse Réduite | 0,8779 | 1,7558 | 2,6337 | 3,5116 | 4,3896 | 5,2675 | 6,1454 | 7,1656 | 7,8822 | 7,9538 |
| Diamètre capillaire/Diamétre particule | 0,2404 | 0,2290 | 0,2164 | 0,2079 | 0,2042 | 0,2047 | 0,2089 | 0,1997 | 0,1980 | 0,1978 |
| Longueur lit Capillaire/Longueur lit particulaire | 0,6678 | 0,2887 | 0,1623 | 0,1079 | 0,0818 | 0,0687 | 0,0626 | 0,0469 | 0,0415 | 0,0411 |
| Vitesse surfacique lit capillaire/lit particulaire | 0,1491 | 0,6261 | 1,4911 | 2,7594 | 4,3897 | 6,3045 | 8,4089 | 11,9635 | 14,5964 | 14,8747 |
| Temps d'élution Lit capillaire/lit particulaire | 4,4781 | 0,4611 | 0,1089 | 0,0391 | 0,0186 | 0,0109 | 0,0074 | 0,0039 | 0,0028 | 0,0028 |
| Volume lit capillaire/Lit particulaire | 0,2233 | 2,1687 | 9,1845 | 25,5650 | 53,6488 | 91,7356 | 134, 3220 | 255,3355 | 351,3127 | 362,1200 |
| Productivité volumique | 0,3311 | 2,8174 | 10,2438 | 23,8154 | 40,1179 | 51,7399 | 51,0740 | 42,5559 | 5,8552 | 0,6035 |

La figure 7 montre le ratio des productivités comparée par unité de volume de colonne entre un garnissage multicapillaire suivant l'invention et un garnissage particulaire. Cette comparaison est réalisée commodément au minimum de la courbe de Van Deemter La comparaison est faite pour une perte de charge en colonne identique et un nombre de plateaux identique entre les deux garnissages. On constate que cette courbe présente un maximum très accusé pour les faibles épaisseurs de phase stationnaire sur la paroi du tube, comprises entre 0,005 et 1,0 fois le rayon hydraulique du conduit libre au passage du fluide. Le garnissage multicapillaire est dans ces conditions jusqu'à 50 fois plus productif que le garnissage particulaire.

La productivité volumique est calculée comme le débit de phase mobile traversant le garnissage par unité de volume ramenée à la quantité de matériau poreux présente dans ledit volume.

Le tableau 1 précédent montre les grandeurs caractéristiques menant à la courbe de la figure 7.

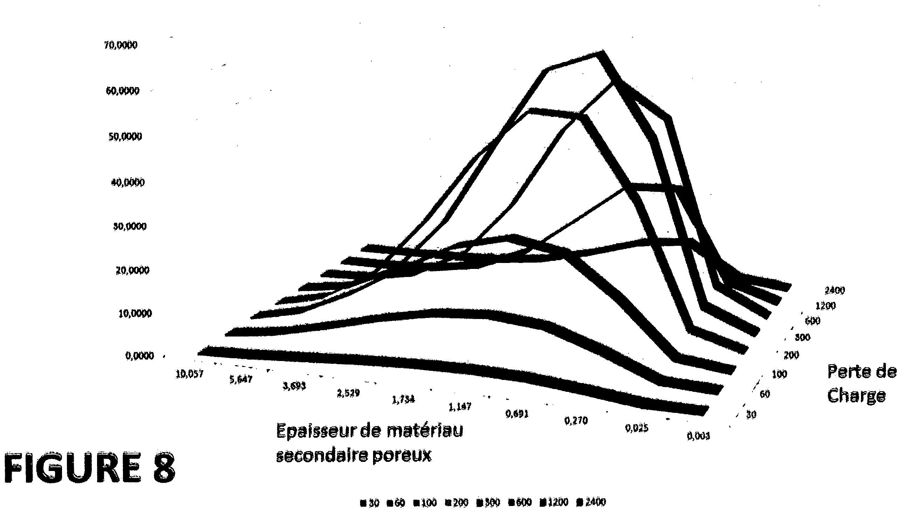

La figure 8 montre le même ratio que la figure 7 dans une plus large gamme de conditions opératoires. Les différentes courbes ou bandes représentent pour une perte de charge adimensionnelle donnée (30 à 2400, optimum de la courbe de Van Deemter pour la valeur 200), le ratio des productivités comparée par unité de volume de colonne pour des épaisseurs de matériau poreux variant de 10,057 µm à 0.003 µm (diamètre du conduit ouvert au passage du fluide ou canal égal à 10 µm).

Le tableau 2 suivant permet de trouver des facteurs de gains a appliquer sur les ratios donnés figure 8 lorsque la vitesse (ou perte de charge) de référence du lit particulaire augmente.

La comparaison est d'autant plus favorable au garnissage suivant l'invention que le lit particulaire est opéré haut en vitesse d'élution.

**Tableau 2**

| Perte de charge | Facteur |
|---|---|
| 200 | 1 |
| 300 | 1,3691427 |
| 600 | 3,88484339 |
| 1200 | 16,1266904 |
| 2400 | 88,3237398 |

Avantageusement l'invention fait appel à un procédé de chromatographie d'élution.

La chromatographie d'élution peut être conduite par toute technique connue, comme par exemple la chromatographie discontinue sur colonne, la chromatographie annulaire continue radiale ou axiale, le lit mobile simulé.

Avantageusement, le procédé chromatographique mis en oeuvre pourra être un procédé de chromatographie d'affinité.

Avantageusement, le procédé chromatographique mis en oeuvre pourra être un procédé d'échange d'ion.

En particulier le matériau poreux pourra être créé à l'aide un procédé sol gel.

Sans sortir du cadre de l'invention ce procédé sol gel pourra également être basé sur un aluminosilicate comme une argile par exemple.

Avantageusement le matériau poreux des garnissages suivant l'invention sera constitué de gel de silice.

Avantageusement, ce gel sera déposé sur la paroi des conduits par trempage sous forme d'un précurseur liquide.

Par précurseur liquide on entend tout liquide conduisant à un gel de silice dans les conditions du procédé de fabrication, comme par exemple un silicate alcalin en solution aqueuse, un sol de silice, un alcoxysilane hydrolysable.

Ce dépôt peut être réalisé par trempage ou mouillage de la paroi interne des conduits de façon à réaliser le dépôt d'un film liquide du précurseur, évacuation et drainage du liquide en excès, et acidification, hydrolyse, séchage ou calcination du dépôt.

Il peut aussi être réalisé par dépôt chimique en phase vapeur en faisant agir par exemple de l'acide fluorhydrique gazeux sur une paroi de silice pure.

Il peut être modifié par tout traitement de surface connu, comme une silanisation par des octadecyltrialkoxysilane, octyltrialkoxysilane, aminopropyltrialkoxysilane, etc...

On trouvera des exemples de tels traitements applicables à des gels de silice et des gels organiques dans la référence [1].

### Exemple de réalisation N°1

Un tube capillaire de PEEK de 150 µm de diamètre externe et de 100 µm de diamètre interne est étiré à chaud de façon à obtenir un tube de 50 µm de diamètre interne.

100000 de ces fibres sont assemblées en un faisceau de 300 mm de long et leur surfaces externes sont collées par une résine époxy sans obturer leurs extrémités. Le faisceau est inséré et collé dans un tube de verre de 300 mm de long et de 30 mm de diamètre interne environ.

Les conduits sont recouverts par trempage d'une fine couche d'un mélange de styrène (91,6% en poids), de 8% en poids de divinylbenzène en poids, et de 0,4% en poids d'un activateur de polymérisation (azobis isobutyronitrile). La couche est déposée en poussant un bouchon liquide de cette mixture dans le faisceau sous un léger flux d'azote.

Il est disposé 24 heures à 70°C sous azote.

Le monolithe ainsi réalisé est converti en un échangeur d'ions basique en le soumettant à l'action d'un courant d'une solution à 15% en poids de tétrachlorure d'étain dans l'éther chlorodiméthylique à 0°C durant 6 heures. Le garnissage est ensuite lavé au méthanol puis par de l'eau et quaternisé par l'action d'un courant d'une solution aqueuse de triméthylamine à 40% durant une période de dix heures. Le garnissage est ensuite lavé jusqu'à neutralité et l'ammonium quaternaire est converti en sa forme hydroxylée.

### Exemple de réalisation N°2

Un tube capillaire de PEEK de 150 µm de diamètre externe et de 100 µm) de diamètre interne est étiré à chaud de façon à obtenir un tube de 50 µm de diamètre interne.

On prépare un mélange contenant 8 g de méthacrylate d'hydroxyéthyle, 32 g de divinylbenzène, 445 mg d'azobisisobutyronitrile, 60 g de dodécanol et on le dégaze sous azote durant 20 minutes.

On injecte une fraction de ce mélange dans le tube précédent et on le pousse a vitesse constante avec un débit lent d'azote de façon à obtenir une épaisseur de 10 µm sur la parois tube.

Ce tube est porté à 70°C durant 24 heures. Le mélange se polymérise.

Le polymère ainsi réalisé est lavé y faisant percoler du THF durant 30 minutes et séché a l'étuve à 90°C.

100 000 de fibres obtenues par découpe en tronçons égaux de un ou plusieurs des des tubes ainsi réalisés sont assemblées en un faisceau de 300 mm de long et leur surfaces externes sont collées par une résine époxy sans obturer leurs extrémités. Le faisceau est inséré et collé dans un tube de verre de 300 mm de long et de 30 mm de diamètre interne environ.

### Exemple de réalisation N°3

200 g de Gel de Silice pour la chromatographie de taille de pore 4 nm (SiliCycle ref R10030 A) sont broyés jusqu'à un diamètre moyen de particules de 3 µm environ.

La poudre est mise graduellement en suspension dans 500 ml d'un mélange de 200 ml de sol de silice HS30 de Grâce à 30% en matière sèche et de 300 ml d'eau déminéralisée.

Un barreau de verre de 25 mm de diamètre contenant 100 000 conduits de 50 µm de diamètre est réalisé et traité de la façon suivante :
Un capillaire verre borosilicaté de 75 µm de diamètre externe et 50 µm de diamètre interne est produit, coupé en longueurs de 40cm et 100 000 de ces fibres sont assemblées en un faisceau, collées ensemble en forme d'un barreau de 30 mm de diamètre par une résine époxy, et insérées dans un tube de verre.

Les conduits sont recouvert sur leur paroi interne par trempage d'une fine couche du mélange de silice et de sol de silice précédent. La couche est déposée en poussant un bouchon liquide de cette mixture dans le faisceau sous un léger flux d'azote.de façon à déposer une épaisseur de silice de 5 µm sur la paroi du faisceau .

Le faisceau est séché sous air à pression atmosphérique à 105 °C durant deux heures.

### Exemple de réalisation N° 4

Le faisceau obtenu à l'exemple N° 3 précédent est encapsulé dans une colonne chromatographique. Avec celle ci on réalise un essai de séparation dans les conditions suivantes:
Phase mobile: méthanol 95 volume par volume/eau 5 volume par volume. Débit d'alimentation 3.3 ml/mn
La courbe de Van Deemter mesurée montre un minimum à 0,33 ml/ mn
Prise d'essai: alcool benzylique 100 ppm en poids dans le méthanol, benzaldehyde 5 ppm en poids dans le méthanol, triméthylamine 5 ppm en poids dans le méthanol.
La colonne présente un nombre de plateau théorique de 5200 au minimum de la courbe de Van Deemter et de 1230 pour 3.3 ml/mn.

### Exemple de réalisation N° 5

Le faisceau obtenu à l'exemple N° 3 précédent est encapsulé dans une colonne chromatographique. Avec celle ci on réalise un essai de séparation dans les conditions suivantes:
Phase mobile: cyclohexane 98 volume par volume/acétate d'éthyle 2 volume par volume.
Débit d'alimentation 2,4 ml/mn
La courbe de Van Deemter mesurée montre un minimum à 0,24 ml/ mn
Prise d'essai: 2 phényl phénol 50 ppm en poids dans le cyclohexane, 2-ter butyl phénol 50 ppm en poids dans le cyclohexane.
La colonne présente un nombre de plateau théorique de 4800 au minimum de la courbe de Van Deemter et de 1050 pour 2,4 ml/mn.

### REFERENCES

[1] Chromatographies en phases liquide et supercritique, R. Rosset, M. Caudé, A. Jardy, MASSON 3^{ème} édition, 1991

## Revendications

1. Procédé d'échange de matière dans lequel on fait circuler une phase mobile gazeuse, liquide ou supercritique contenant des espèces à séparer à travers un garnissage comprenant une phase stationnaire,
le garnissage comprend une pluralité de conduits capillaires formés dans au moins un premier matériau, les conduits traversant le garnissage entre une face amont par laquelle la phase mobile entre dans le garnissage et une face aval par laquelle la phase mobile quitte le garnissage, chaque conduit comprenant, sur au moins une partie de la paroi interne de celui-ci, au moins un matériau secondaire qui consiste en un gel organique ou un minéral poreux ;
l'épaisseur du matériau secondaire définit, à l'intérieur du conduit, au moins un canal tubulaire vide de matériau solide, le canal étant ouvert de manière à permettre à la phase mobile d'entrer dans et de s'étendre de façon continue entre les faces amont et aval du conduit capillaire ;
le volume cumulé des conduits capillaires est supérieur à 15 % du volume total de garnissage ;
**caractérisé en ce que** le procédé est réalisé sur une colonne dont les conduits présentent une épaisseur de matériau secondaire poreux comprise entre 0,01 fois et 0,15 fois le diamètre du canal, à une vitesse d'élution comprise entre 5 fois et 25 fois la vitesse optimale de la phase mobile définie par le minimum de la courbe de Van Deemter du composé majoritaire se séparant dans les conditions du procédé.

2. Procédé selon la revendication 1 **caractérisé en ce que** la séparation d'une charge est conduite sur une pluralité de cycles.

3. Procédé selon l'une ou l'autre des revendications 1 et 2 **caractérisé en ce que** le procédé est réalisé avec un temps de cycle inférieur à 600 secondes, plus avantageusement inférieur à 180 secondes et encore plus avantageusement inférieur à 30 secondes.

4. Procédé selon l'une quelconque des revendications précédentes **caractérisé en ce que** l'épaisseur de matériau secondaire est portée sur une paroi non poreuse de capillaire.

5. Procédé selon l'une quelconque des revendications précédentes **caractérisé en ce que** le diamètre des canaux est inférieur à 150 micromètres, de préférence inférieur à 50 micromètres, et mieux encore inférieur à 15 micromètres.

6. Procédé selon l'une quelconque des revendications précédentes **caractérisé en ce que** le matériau secondaire est un gel de silice.

7. Procédé selon l'une quelconque des revendications précédentes **caractérisé en ce que** le matériau secondaire est un gel polymère.

## Patentansprüche

1. Verfahren für Stoffaustausch, bei dem eine gasförmige, flüssige oder überkritische bewegliche Phase, die zu trennende Spezies enthält, durch eine Füllung umgewälzt wird, die eine stationäre Phase umfasst,
die Füllung umfasst eine Vielzahl von Kapillarkanälen, die aus mindestens einem ersten Material gebildet sind, wobei die Kanäle die Füllung zwischen einer vorgeschalteten Seite, über die die bewegliche Phase in die Füllung eintritt, und einer nachgeschalteten Seite durchqueren, über die die bewegliche Phase die Füllung verlässt, wobei jeder Kanal über mindestens einen Teil seiner Innenwand mindestens ein sekundäres Material umfasst, das aus einem organischen Gel oder einem porösen Mineral besteht;
die Dicke des Sekundärmaterials definiert innerhalb der Leitung mindestens einen rohrförmigen Kanal, der von festem Material leer ist, wobei der Kanal auf eine Weise offen ist, um der beweglichen Phase zu gestatten, in die Kapillarleitung einzutreten und sich kontinuierlich zwischen der vorgeschalteten und der nachgeschalteten Seite der Kapillarleitung zu erstrecken ;
das kumulierte Volumen der Kapillarleitungen beträgt mehr als 15 % des Gesamtvolumens der Füllung;
**dadurch gekennzeichnet, dass** das Verfahren auf einer Kolonne, deren Kanäle eine Dicke des porösen Sekundärmaterials zwischen dem 0,01-fachen und 0,15-fachen des Kanaldurchmessers darstellen, bei einer Elutionsgeschwindigkeit zwischen dem 5-fachen und 25-fachen der optimalen Geschwindigkeit der beweglichen Phase verwirklicht wird, die durch das Minimum der Van-Deemter-Kurve der sich unter den Verfahrensbedingungen abscheidenden Mehrheitsverbindung definiert ist.

2. Verfahren nach Anspruch 1, **dadurch gekennzeichnet, dass** die Trennung einer Ladung über eine Vielzahl von Zyklen durchgeführt wird.

3. Verfahren nach einem der Ansprüche 1 und 2, **dadurch gekennzeichnet, dass** das Verfahren mit einer Zykluszeit von weniger als 600 Sekunden, vorteilhafterweise weniger als 180 Sekunden und noch vorteilhafterweise weniger als 30 Sekunden verwirklicht wird.

4. Verfahren nach einem der vorhergehenden Ansprüche, **dadurch gekennzeichnet, dass** die Dicke des Sekundärmaterials auf einer nicht porösen Kapillarwand ruht.

5. Verfahren nach einem der vorhergehenden Ansprüche, **dadurch gekennzeichnet, dass** der Durchmesser der Kanäle weniger als 150 Mikrometer, vorzugsweise weniger als 50 Mikrometer und besonders bevorzugt weniger als 15 Mikrometer ist.

6. Verfahren nach einem der vorhergehenden Ansprüche, **dadurch gekennzeichnet, dass** das Sekundärmaterial ein Kieselgel ist.

7. Verfahren nach einem der vorhergehenden Ansprüche **dadurch gekennzeichnet, dass** das Sekundärmaterial ein Polymergel ist.

## Claims

1. A method of exchanging material, wherein a gaseous, liquid, or supercritical mobile phase containing species to be separated is circulated through a packing comprising a stationary phase,
the packing comprises a plurality of capillary ducts formed in at least one first material, the ducts passing through the packing between an upstream face by which the mobile phase enters the packing and a downstream face by which the mobile phase leaves the packing, each duct comprising, on at least one portion of the inner wall thereof, at least one secondary material which consists of an organic gel or a porous mineral;
the thickness of the secondary material defines, inside the duct, at least one empty tubular channel of solid material, the channel being open so as to allow the mobile phase to enter into and be extended continuously between the upstream and downstream faces of the capillary ducts;
the cumulative volume of the capillary ducts is more than 15% of the total packing volume; **characterised in that** the method is carried out on a column, the ducts of which have a thickness of porous secondary material of between 0.01 times and 0.15 times the diameter of the channel, at an elution speed of between 5 times and 25 times the optimum speed of the mobile phase defined by the minimum of the Van Deemter curve of the majority compound being separated under the method conditions.

2. The method according to claim 1, **characterised in that** the separation of a load is carried out over a plurality of cycles.

3. The method according to one or other of claims 1 and 2, **characterised in that** the method is carried out with a cycle time of less than 600 seconds, more advantageously less than 180 seconds and even more advantageously less than 30 seconds.

4. The method according to any one of the preceding claims, **characterised in that** the thickness of the secondary material is borne over a non-porous capillary wall.

5. The method according to any one of the preceding claims, **characterised in that** the diameter of the channels is less than 150 micrometres, preferably less than 50 micrometres, and better still less than 15 micrometres.

6. The method according to any one of the preceding claims, **characterised in that** the secondary material is a silica gel.

7. The method according to any one of the preceding claims, **characterised in that** the secondary material is a polymeric gel.
